# Europäisches Patentamt

## European Patent Office

## Office européen des brevets

(11) Publication number: **0 145 306**
**B1**

(12)

# EUROPEAN PATENT SPECIFICATION

(45) Date of publication of patent specification: **16.08.89**

(51) Int. Cl.⁴: **B 60 J 5/04**

(21) Application number: **84307824.7**

(22) Date of filing: **12.11.84**

(54) **Motor vehicle door assembly.**

(30) Priority: **12.11.83 GB 8330269**

(43) Date of publication of application:
**19.06.85 Bulletin 85/25**

(45) Publication of the grant of the patent:
**16.08.89 Bulletin 89/33**

(84) Designated Contracting States:
**BE DE FR GB IT NL SE**

(56) References cited:
**EP-A-0 015 201**
**WO-A-81/03467**
**DE-A-1 455 812**
**DE-A-1 923 943**
**DE-A-2 934 278**
**DE-A-3 004 897**
**DE-A-3 104 681**
**DE-A-3 209 052**

(73) Proprietor: **FORD MOTOR COMPANY LIMITED**
**Eagle Way**
**Brentwood Essex CM13 3BW (GB)**
(84) **BE GB IT NL SE**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Campbell, Alan Alexander**
**Tiltings Mill Lane**
**Stock Essex (GB)**
Inventor: **Knaggs, Peter**
**20 St. Stephens Road**
**Cold Norton Essex (GB)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to a method of assembling a motor vehicle door, and to a door assembly itself. The invention also extends to a method of assembling motor vehicles on an assembly line.

Conventionally, vehicle doors, for example the doors for the Ford Sierra are constructed from two main components, an inner panel and an outer panel. The outer panel forms the door "skin". The outer and inner panels are secured together around their peripheries so as to define, in an upper region above the waist line a window frame and, below the waist line a door body. In the door body region, the inner and outer panels are spaced apart and form an internal cavity between them. This cavity is used to contain window winding mechanisms and door locking mechanisms. These mechanisms are put into place in the cavity through openings formed in the inner panel. The various openings in the panel, which are often quite large and are irregularly shaped, are covered by a trim panel which forms the final internal surface of the door.

Manipulating the various internal components of the door into place in the cavity is quite difficult and time consuming. It is also practically impossible to have this work done by robots. Because of the presence of the cavities, it is necessary to place a water barrier, usually a plastic sheet, between the metal of the inner panel and the trim panel.

The door to vehicle assembly is usually carried out by attaching the unpainted doors to the unpainted body shell then painting the complete body and then passing the completed body down the assembly line with the doors wide open so that the assembly line workers have access to the body interior. The doors are susceptible to damage in this condition; the extra width of the body shell resulting from the open doors requires extra space on the production line, and the assembly workers waste time in having to walk around the doors to do their work.

According to one aspect of the present invention, there is provided a method of assembling a vehicle door, comprising the steps of providing a stress bearing door frame which includes an inner panel, mounting door internal components on the inner panel from outside the door, and fitting a door outer skin to the frame to enclose a cavity with the inner panel, in which cavity the internal components are located.

This assembly of a door from outside, with the assembly being carried out before the door skin is fitted, makes the assembly very much easier because it is no longer necessary to manipulate components within an already closed cavity. Assembly can easily be done by robots. Furthermore the only holes needed in the door inner panel are those through which shafts or fastenings will project. The panel can therefore be stronger than was previously the case and a separate water barrier to prevent water penetrating inside the vehicle is no longer required. In addition, since the exposed face of the inner panel will be substantially continuous, this face can itself serve as an armature for supporting the necessary internal trim and thus the internal trim does not need to be formed as a rigid panel, but can be flexible material which can be directly applied to the metal of the inner panel.

The door outer skin can be a plastics moulding which can be bolted to the door frame in assembly. The skin may incorporate strengthening bars as required by various legislations, to increase the strength of the door against side impacts.

The formation of the outer skin as a moulded part makes it possible to incorporate in it features which previously had to be formed separately. For example, a cylindrical socket which will accommodate the rotatable door lock cylinder can be integrally moulded with the door skin, as can a pivot mounting support for the exterior door handle. There is also a possibility of integrally moulding a housing for a door-mounted rear view mirror as part of the outer panel.

The door frame may comprise a peripheral member extending substantially around the whole of the edge of the door and an inner panel member fastened to the peripheral member.

The invention also provides a door assembly for a motor vehicle, the assembly comprising an inner panel and an outer panel, characterised in that two metal pressings are secured together to form a stress-bearing door frame, one of the pressings providing the inner panel which in use will support interior trim, the frame defining the periphery of a glass run channel, supporting the door internal components and having the door hinges attached thereto, and in that the outer panel is detachably mounted to the frame and extends only below the door waist line.

The invention further provides a method of assembling a motor vehicle, wherein the vehicle body is painted without any doors attached, the vehicle assembly, and the door assembly are completed on separate lines, the door assembly having been assembled by the method set forth above and the doors are mounted to the vehicle at a late stage in assembly.

If the door assembly proceeds as set forth above, the door frame with the inner panel and the window frame may be painted a standard colour for all vehicles, and the door outer skin can then be painted to match the vehicle body colour. The standard colour used for the door frame is preferably gloss black. In the finished vehicle the only part of this frame which will be exposed is the window frame, and a gloss black paint here enhances the "fully-glazed" appearance of the car since a casual glance may find it difficult to see where the glass ends and the metal begins. Thus the vehicle will appear to have a very large glass area, which is a feature that vehicle stylists are keen to achieve.

The invention will now be further described, by way of example, with reference to the accompanying drawings, in which:

Figure 1 is a schematic exploded view of a door according to the invention, omitting the inner panel;

Figure 2 is an exploded view of a portion of a door in accordance with the invention;

Figure 3 is a section through a door in accordance with the invention, in the region of a hinge for the door;

Figure 4 is a section through the door of Figure 1 taken on the lines IV-IV;

Figure 5 is a section through the door of Figure 1 on the line V-V, together with the adjacent A-pillar of a car; and

Figure 6 is a detail sectional view taken on the line VI-VI from Figure 1.

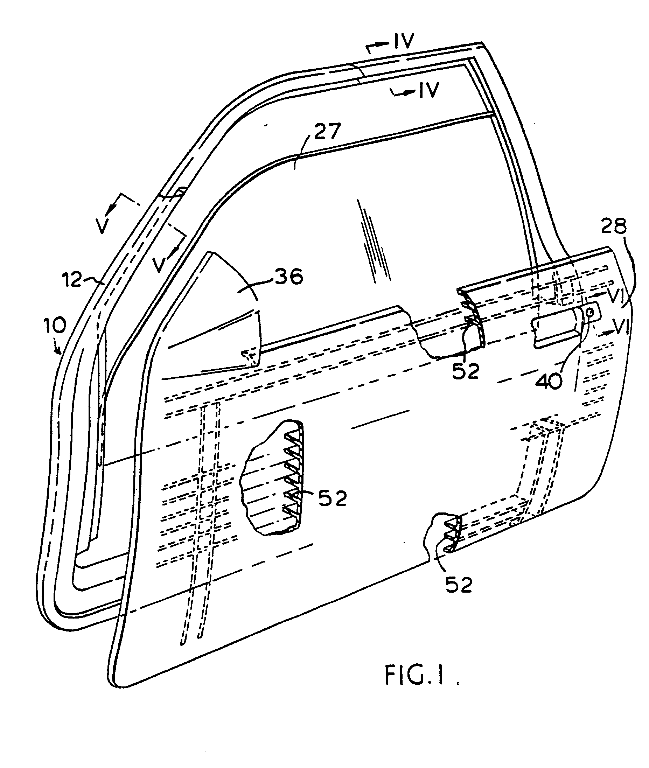

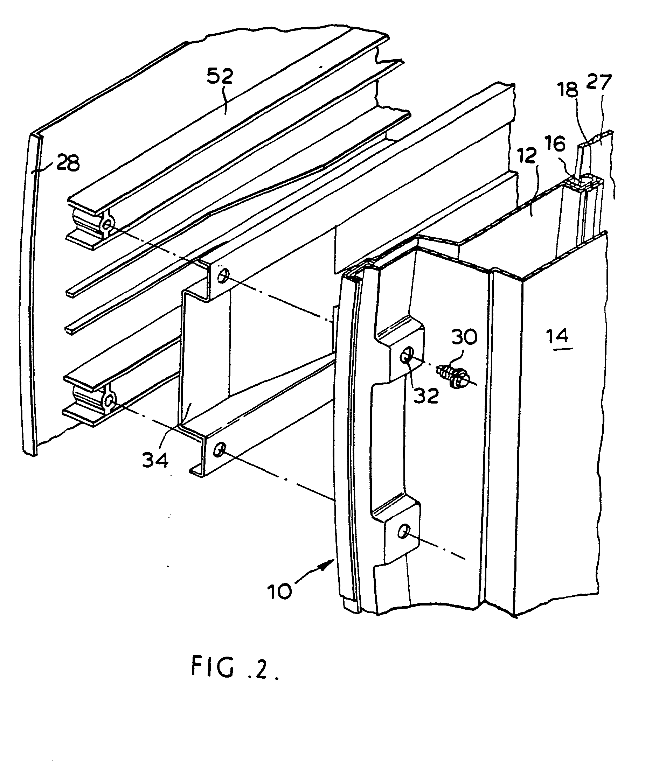

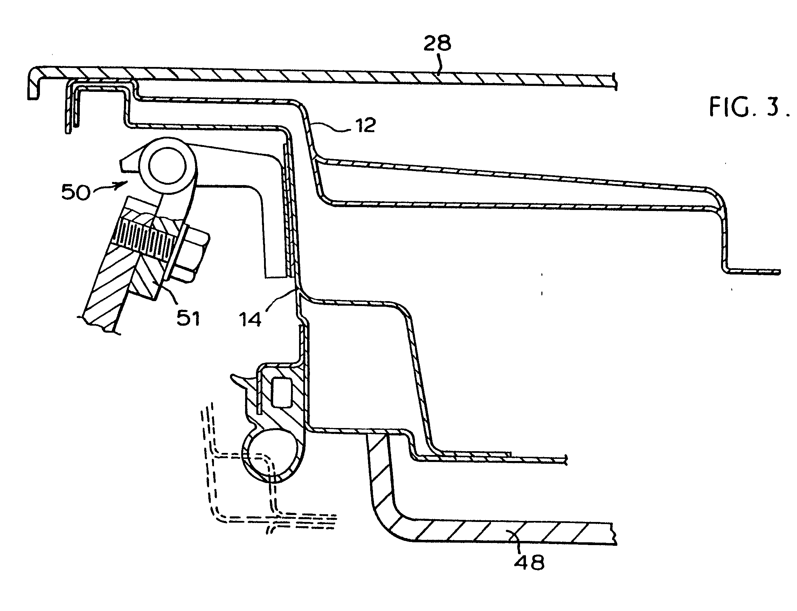

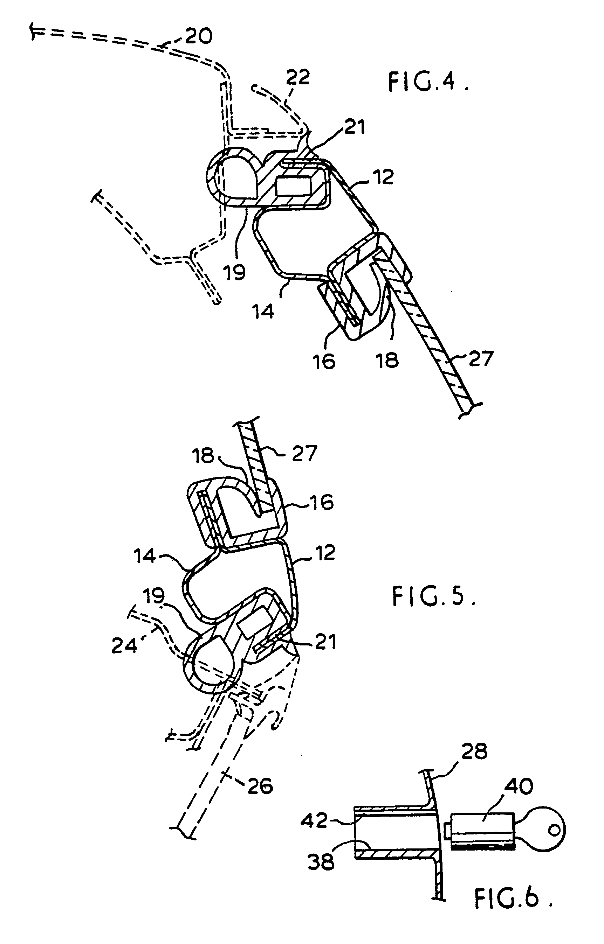

The door shown in Figure 1 has a frame 10 made up of an intermediate outer panel, or peripheral frame, 12 and an inner panel 14. In Figure 1, only the intermediate outer of these two panels is shown. Both panels are however visible in Figures 2 to 5. The intermediate outer panel 12 extends around the periphery of the door, The inner panel 14 also extends around the periphery of the door but in addition extends across the inside of the door below the waist line. The intermediate outer panel 12 and inner panel 14 are spot welded together, and together form a box-section support around the window frame as can be seen particularly in Figures 4 and 5.

In a preferred embodiment this door frame 10, made up from the intermediate outer 12 and the inner panel 14, is painted gloss black for all cars on a production line, irrespective of the final paint colour to be applied to any particular car.

As can be seen from Figures 4 and 5, a glass run channel 16 is fitted to a flange formed on the door frame. The design of the channel as shown in Figures 4 and 5 allows the movable window glass 27 to be practically flush with the outer surface of the door, as is desirable for aerodynamic reasons. The glass run channel 16 can have a flexible sealing tongue 18 which serves the two functions of keeping the window glass 27 pressed against the outside of the channel 16, and providing a seal between the glass and the door frame.

Figures 4 and 5 also show an R-shaped sealing strip 19 which is fitted to another flange 21 formed by the intermediate outer panel 12 and the inner panel 14. In the drawings this seal is shown without the compression which will actually take place when the door is shut against the vehicle body. Adjacent parts of the vehicle body are indicated in dotted lines and it will be clear that when the door is shut, the sealing strip 19 will be compressed against these adjacent parts. These adjacent parts are the roof 20 with a gutter 22, and the A-pillar 24 with the windscreen 26.

The intermediate outer panel 12 forms the exterior of the door above the waist line and surrounds the window opening.

To assemble the door, the intermediate outer panel 12 and the inner panel 14 are first secured together by spot welding around their periphery. The next stage in door assembly is to mount the internal door components such as window winding mechanisms, door latches, window glass and so forth to the door frame. This is done from the outside of the door and is very easy to do because there is as yet no outer skin fitted to the door frame. The only holes that need to be provided in the inner panel are those for accommodating fastenings, by means of which the internal components will be attached to the inner panel. It is not necessary to provide access openings to allow the internal component to be positioned by hand into the internal space of the door, and as a result, this assembly can be done by robot.

Once all the internal components have been correctly mounted, the outer skin panel 28 is fitted to the assembly. Figure 2 shows how this mounting is accomplished. The outer panel 28 can conveniently be a plastics moulding which has already been painted to match the colour of the vehicle on which it will be mounted. The outer panel is then secured to the door assembly by means of bolts 30 which pass through apertures 32 in the frame 10.

A plastics outer panel has several advantages over a metal panel. The plastics panel is resilient and is thus not permanently damaged by a minor impact. The plastics panel is also lighter. The invention is not however restricted to the use of a plastics panel as the outer panel 28, and it is within the scope of the invention to use a metal panel 28.

Where required, a beam 34 which is designed to resist side intrusion as required by some legislations, may be integrated with the outer panel 28 and secured to the door frame 10 with the outer panel.

A further advantage of a plastics outer panel 28 is that such a panel can be formed by moulding which gives the possibility of introducing intricate shapes which could not be manufactured by a metal pressing technique. Figure 1 shows a housing 36 for a door-mounted exterior rear view mirror which can be produced in a particulary stream-lined shape. Furthermore, the door lock and latch mountings can be integrated with the outer panel. Figure 6 shows how a cylindrical socket 38 which will receive a cylinder lock 40 can be moulded in one piece with the outer panel itself. The socket 38 can have the necessary internal formations such as a longitudinal groove 42 for receiving the tumblers of the cylinder, when the cylinder is locked. When the cylinder is unlocked, the tumblers are of course retracted into the cylinder (this is when the correct key 44 is inserted in the cylinder), and the cylinder can be rotated. Similarly, supports for a hinge pin of a door latch can be moulded into the reverse side of the outer panel 28.

Assembly of the door as described results in an inner panel which, once all the internal components are fitted, has no apertures in it. This has two major advantages. Firstly, there is no need to make provision for an additional moisture barrier to prevent moisture entering the interior of the vehicle through openings in the panel. Conventionally, such a barrier is provided by sandwiching a sheet of plastics film between a trim panel and the metal of the inner panel. Secondly, because the inner panel is continuous, it can itself act as a support or armature for trim to be applied to the door. Trim is conventionally applied to hide the surface of the inner panel from view. Since conventional inner panels have large apertures in them, it is necessary to mount the trim on an armature, and then to secure the armature and the trim to the door. In the invention, the trim can be a flush moulded sheet 48 directly secured to the door without an armature.

The door assembly described can be assembled off the vehicle body. It is proposed that doors and vehicle bodies be assembled separately, on separate production lines, with the doors only being attached to the vehicle at a late stage in a vehicle assembly. In such an an assembly process, the vehicle body shells would be painted without any doors attached. The door assemblies would be painted without the outer panel 28 attached, and all the door assemblies, whatever the colour of the vehicle to which they will eventually be attached, would be painted gloss black. The vehicle body assembly would proceed as normal, but would be facilitated by the absence of the doors which would also make it possible to allow less space for the assembly line since there would be no laterally projecting doors to allow for. The door assembly line could be parallel to the vehicle body assembly line. The doors would only be allocated to a particular vehicle body at the end of both assembly lines, at the stage when the outer panel 28 would have to be mounted onto the door assembly, the hinge 50 can have a flange 51 which can be bolted onto the vehicle body.

The outer skin panel 28 has stiffening ribs 52, as necessary.

## Claims

1. A door assembly for a motor vehicle, the assembly comprising an inner panel (14) and an outer panel (28), characterised in that two metal pressings (12, 14) secured together to form a stress-bearing door frame (10), one of the pressings providing the inner panel (14) which in use will support interior trim, the frame defining the periphery of a glass run channel, supporting the door internal components and having the door hinges attached thereto, and in that the outer panel (28) is detachably mounted to the frame and extends only below the door waist line.

2. An assembly as claimed in Claim 1, wherein the outer panel (28) includes a stiffening beam (34) to resist side intrusion.

3. An assembly as claimed in Claim 1 or Claim 2, wherein the outer panel (28) is of a plastics material.

4. An assembly as claimed in Claim 3, wherein door components, other than the outer panel itself, are moulded integrally with the outer panel.

5. An assembly as claimed in claim 4, wherein a housing (36) for an external rear-view mirror is moulded integrally with the outer panel (28).

6. An assembly as claimed in Claim 4 or Claim 5, wherein a cylinder lock housing (40) is moulded integrally with the outer panel (28).

7. An assembly as claimed in Claim 4, 5 or 6, wherein pivot supports for a door latch handle are moulded integrally with the outer panel.

8. An assembly as claimed in any preceding claim, wherein the outer panel (28) is bolted to the door frame.

9. An assembly as claimed in any preceding claim, wherein the inner panel (14) has holes therein for fasteners which secure door internal components to the inner panel, and for operative parts of the door internal components which in use extend to the vehicle interior, and no other holes.

10. An assembly as claimed in Claim 9, including soft internal door trim material (48) mounted directly on the inner panel.

11. A method of assembling a motor vehicle door, comprising the steps of providing a stress bearing door frame which has an inner door panel, but no outer door panel, mounting door internal components on the inner panel from the side which in the finished door will be hidden by an outer panel, and thereafter mounting to the frame an outer panel which does not extend above the waist line.

12. A method as claimed in Claim 11, wherein the door is assembled off the vehicle.

13. A method as claimed in Claim 11 or 12, wherein the door frame is painted gloss black before assembly.

14. A method as claimed in any one of Claims 11 to 13, wherein the door frame is made up from an intermediate outer component and an inner panel.

15. A method as claimed in any one of Claims 11 to 14, wherein soft trim material is applied directly to the inner panel.

16. A method of assembling a motor vehicle, wherein the vehicle body is painted and assembled without its doors attached, the doors are assembled separately by the method of any one of Claims 11 to 15.

## Patentansprüche

1. Türkonstruktion für ein Kraftfahrzeug, enthaltend eine Innenwand (14) und eine Außenwand (28), dadurch gekennzeichnet, daß zwei zur Bildung eines gespannten Türrahmens (10) aneinander befestigte Metallpreßteile (12, 14) vorgesehen sind, wobei eines der Preßteile die Innenwand (14) bildet, die bei Gebrauch die Innenverkleidung hält, wobei der Rahmen den Umfang eines Glaslaufkanals begrenzt, die Türinnenteile stützt und mit zwei Türangeln versehen ist, und dadurch, daß die Außenwand (28) abnehmbar an dem Rahmen montiert ist und nur unterhalb der Mittellinie der Tür verläuft.

2. Konstruktion nach Anspruch 1, worin die Außenwand (28) einen Versteifungsträger (34)

aufweist, der widerstandsfähig ist gegen seitliches Eindrücken.

3. Konstruktion nach Anspruch 1 oder Anspruch 2, worin die Außenwand (28) aus einem plastikmaterial besteht.

4. Konstruktion nach Anspruch 3, worin die Türteile, von der Außenwand selbst abgesehen, einstückig mit der Außenwand geformt sind.

5. Konstruktion nach Anspruch 4, worin ein Gehäuse (36) für einen Außenrückspiegel einstückig mit der Außenwand (28) geformt ist.

6. Konstruktion nach Anspruch 4 oder Anspruch 5, worin ein Zylinderschloßgehäuse (40) einstückig mit der Außenwand (28) geformt ist.

7. Konstruktion nach Anspruch 4, 5 oder 6, worin Zapfenträger für einen Türgriff einstückig mit der Außenwand geformt sind.

8. Konstruktion nach einem der vorhergehenden Ansprüche, worin die Außenwand (28) mit dem Türrahmen verschraubt ist.

9. Konstruktion nach einem der vorhergehenden Ansprüche, worin die Innenwand (14) Öffnungen für Befestigungen aufweist, die die Türinnenteile mit der Innenwand befestigen, sowie für Betriebsteile der Türinnenteile, die bei Gebrauch bis ins Fahrzeuginnere verlaufen, und keine weiteren Öffnungen.

10. Konstruktion nach Anspruch 9, beinhaltend ein weiches Verkleidungsmaterial (48) für die Innentür, das direkt an der Innenwand angebracht ist.

11. Verfahren zum Zusammensetzen einer Kraftfahrzeugtür, umfassend die folgenden Schritte: Vorsehen eines gespannten Türrahmens, der eine Türinnenwand, jedoch keine Türaußenwand aufweist, Montieren der Türinnenteile an der Innenwand von der Seite, die bei der fertigen Tür von einer Außenseite verdeckt ist, und danach Montieren einer Außenwand an den Rahmen, die nicht bis über die Mittellinie hinausgeht.

12. Verfahren nach Anspruch 11, worin die Tür getrennt vom Fahrzeug zusammengesetzt wird.

13. Verfahren nach Anspruch 11 oder 12, worin der Türrahmen vor dem Zusammensetzen glänzend schwarz gestrichen wird.

14. Verfahren nach einem der Ansprüche 11 bis 13, worin der Türrahmen aus einem äußeren Zwischenteil und einer Innenwand zusammengesetzt wird.

15. Verfahren nach einem der Ansprüche 11 bis 14, worin das weiche Verkleidungsmaterial direkt auf die Innenwand aufgebracht wird.

16. Verfahren zum Zusammensetzen eines Kraftfahrzeugs, worin die Fahrzeugkarosserie ohne montierte Türen gestrichen und zusammengebaut wird und die Türen nach dem Verfahren gemäß einem der Ansprüche 11 bis 15 getrennt zusammengesetzt werden.

**Revendications**

1. Ensemble porte pour véhicule automobile, cet ensemble comprenant un panneau intérieur 14 et un panneau extérieur (28) et étant caractérisé en ce que deux éléments métalliques emboutis (12, 14) sont fixés entre eux pour constituer un caisson de porte (10) supportant les efforts, l'un de ces éléments emboutis formant le panneau intérieur (14) qui, lors de l'utilisation, devra supporter l'habillage intérieur, le caisson délimitant la partie périphérique d'un couloir formant glissière de glace, portant les éléments intérieurs de la porte, tandis que les charnières de la porte sont fixées sur lui, et en ce que le panneau extérieur (28) est monté de manière amovible sur ce caisson et ne s'étend qu'au-dessous de la ligne de ceinture de la porte.

2. Ensemole porte suivant la revendication 1, dans lequel le panneau extérieur (28) comprend une poutre de raidissement (34) destinée à résister à un enfoncement latéral.

3. Ensemble porte suivant l'une des revendications 1 ou 2, dans lequel le panneau extérieur (28) est en une matière plastique.

4. Ensemble porte suivant la revendication 3, dans lequel des éléments de porte autres que le panneau extérieur lui-même sont réalisés venus de matière, par moulage, avec ce panneau extérieur.

5. Ensemble porte suivant la revendication 4, dsns lequel un logement (36) destiné à un rétroviseur extérieur est réalisé venu de matière, par moulage, avec le panneau extérieur (28).

6. Ensemble porte suivant l'une des revendications 4 ou 5, dans lequel un logement de serrure à pompe (40) est réalisé venu de matière, par moulage, avec le panneau extérieur (28).

7. Ensemble porte suivant l'une des revendications 4 à 6, dans lequel des supports de pivot pour une manette de verrou de porte sont réalisés venus de matière, par moulage, avec le panneau extérieur.

8. Ensemble porte suivant l'une des revendications précédentes, dans lequel le panneau extérieur (28) est vissé sur le caisson de porte.

9. Ensemble porte suivant l'une des revendications précédentes, dans lequel des trous sont ménagés dans le panneau intérieur (14) pour des organes qui servent à fixer des éléments intérieurs de porte sur ce panneau intérieur et pour des pièces fonctionnelles de ces éléments intérieurs de porte qui, lors de l'utilisation, s'étendent vers l'intérieur du véhicule, ces trous étant les seuls.

10. Ensemble porte suivant la revendication 9, comprenant un matériau d'habillage intérieur de porte (48) monté directement sur le panneau intérieur.

11. Procédé d'assemblage d'une porte de véhicule automobile, consistant à prévoir un caisson de porte supportant les efforts et qui comporte un panneau intérieur de porte, mais pas de panneau extérieur de porte, à monter les éléments intérieurs de la porte sur ce panneau intérieur à partir du côté qui, dans la porte finie, sera caché par un panneau extérieur, et à monter ensuite, sur le caisson, un panneau extérieur qui ne s'étend pas au-dessus de la ligne de ceinture.

12. Procédé suivant la revendication 11, selon lequel on assemble la porte à l'écart du véhicule.

13. Procédé suivant l'une des revendications 11 ou 12, selon lequel on peint le caisson de porte en noir brillant avant l'assemblage.

14. Procédé suivant l'une quelconque des revendications 11 à 13, selon lequel le caisson de porte est constitué d'un élément extérieur intermédiaire et d'un panneau intérieur.

15. Procédé suivant l'une quelconque des revendications 11 à 14, selon lequel on applique un matériau souple d'habillage directement sur le panneau intérieur.

16. Procédé de montage pour véhicule automobile, selon lequel on peint et assemble la carrosserie du véhicule sans que ses portes n'y soient fixées, et on assemble à part les portes conformément au procédé de l'une quelconque des revendications 11 à 15.

FIG.1.

FIG .2 .

FIG. 3.

EP 0 145 306 B1

EP 0 145 306 B1

FIG.4.

FIG.5.

FIG.6.

4